# EUROPEAN PATENT SPECIFICATION

(11) **EP 3 462 153 B1**
(45) Date of publication and mention of the grant of the patent: **22.09.2021**
(21) Application number: 17193981.2
(22) Date of filing: 29.09.2017
(51) Int. Cl.: G01K 13/024, G01K 13/02

(54) **METHOD FOR DETERMINING A LOCAL HOT GAS TEMPERATURE IN A HOT GAS DUCT, AND DEVICES FOR CARRYING OUT THE METHOD**
VERFAHREN ZUR BESTIMMUNG EINER LOKALEN HEISSGASTEMPERATUR IN EINEM HEISSGASKANAL UND VORRICHTUNGEN ZUR DURCHFÜHRUNG DES VERFAHRENS
PROCÉDÉ POUR DÉTERMINER UNE TEMPÉRATURE DE GAZ CHAUDS LOCAUX DANS UN CONDUIT DE GAZ CHAUD ET DISPOSITIFS PERMETTANT DE METTRE EN UVRE LE PROCÉDÉ

(43) Date of publication of application: 03.04.2019
(73) Proprietor: General Electric Technology GmbH, 5400 Baden (CH)
(72) Inventor: HAFFNER, Ken Yves, 5400 Baden (CH); MOHR, Wolfgang Franz Dietrich, 5242 Birr (CH)
(74) Representative: BRP Renaud & Partner mbB Rechtsanwälte Patentanwälte Steuerberater

(56) References cited:
- EP-A1- 2 107 305
- GB-A- 2 452 026
- US-A1- 2017 191 901

## Description

### TECHNICAL FIELD

The present disclosure relates to a method for determining a local hot gas temperature in a hot gas duct, in particular of combustion flue gases, as set forth in claim 1. It further relates to devices for carrying out the method as set forth in the device claims.

### BACKGROUND OF THE DISCLOSURE

Temperatures in gas turbine engines downstream the combustor and upstream a first expansion turbine stage commonly reach, at least at high loads, values which push the strength of mechanical components in the hot gas duct to the limits, although they are cooled. A direct measurement of the hot gas temperature would be extremely expensive in field engines. For instance, thermocouples have very limited lifetime as they do not withstand the high temperatures in modern gas turbine engines, and even if they did, the measurement results would, due to heat conduction effects and radiative heat transfer to cooled walls, be highly unreliable and inaccurate. Thus, measurements are taken, which allow a calculation of the temperature at the exit of the combustor. Those calculations may comprise a temperature after the expansion turbine and a pressure ratio across the expansion turbine. The commonly applied measurements yield results which are not, or in best case very poorly, spatially resolved. Moreover, those measurements may be largely influenced by the addition of cooling fluid to the working fluid while it is expanded in the turbine.

On the other hand, it is known that with the high temperatures commonly present at the expansion turbine inlet of modern gas turbine engines, deviations of a local temperature from a mean temperature yield a highly non-linear effect on the component lifetime. For instance, an increase in hot gas temperature at a particular location of a vane of an expansion turbine first stage of as little as 30 °C may reduce component lifetime by about 50%. The result may be severe engine damage, or, to reduce the related risk, over-dimensioning and/or overcooling of the components, or premature overhaul and component replacement. All these measures have a negative economic impact in reducing engine efficiency, increasing engine down time, and adding cost. It is thus found desirable to determine the temperature at the exit of the combustion chamber, or at the entry to the first expansion turbine stage, respectively, reliably, accurate, and spatially and timely resolved.

The method disclosed in US 6,318,891 enables to determine gas temperatures by chemiluminescence measurements. The measured chemiluminescence originates from excited radicals, e.g. hydroxyl or carbohydrate radicals, and may thus only be applied within a reaction zone of combustion. Also, the methods disclosed in US 2007/0133921 and US 2013/0100445 focus on optical in-situ measurements in flames rather than chemically inactive combustion flue gases. WO 01/22045 discloses a method and device for measuring the temperature of a gas using laser-induced incandescence pyrometry. US 2016/0252019 for an instance describes a state-of-the art method of determining a combustor outlet or expansion turbine inlet, respectively, temperature based upon the exhaust temperature after the expansion turbine, and the expansion turbine pressure ratio. It is obvious that a spatially resolved determination of the temperature at the turbine inlet is thus not possible. The skilled person will also appreciate, that the detection of changes in the turbine inlet temperature is delayed, and the use of the thus gained data for control purposes is thus limited to comparatively slow control actions.

US2017/0191901 discloses a measuring comb for temperature and/or pressure and/or chemical composition of the gases flowing at the outlet of a turbine engine flow path, in which the flow path extends around an axis of revolution of the flow path, is provided. The measuring comb includes: a comb body with an elongated shape, intended to face the outlet of the flow path, the comb body including at least one measuring opening arranged along an axis, the measuring opening being configured to tap gases flowing at the outlet of the flow path; and an adjusting system configured to adjust an angle between the axis of the at least one measuring opening and the axis of revolution, so as to allow orientation of the at least one measuring opening in the flow direction of the gases at the outlet of the flow path. EP 2 107 305 proposes a gas turbine system which includes at least one oxygen sensor disposed at a location downstream of a flame and adapted for measuring an oxygen concentration of the combustion gas at that location. Further, the proposed gas turbine system includes means for determining the temperature of said flame based upon the measured oxygen concentration of the combustion gas at the location of said at least one oxygen sensor. GB 2 452 026 proposes an airfoil comprising a multitude of tubes forming orifices in fluid communication with passages provided inside the airfoil. The passages are intended to route instrumentation thereto, or be connected to pressure gauges.

### OUTLINE OF THE SUBJECT MATTER OF THE PRESENT DISCLOSURE

It is an object of the present disclosure to disclose a method and a device of the kind initially mentioned. In one more specific aspect, a method shall be disclosed which enables a reliable, accurate and fast in situ determination of a local temperature of the hot flue gas downstream a combustor, or at the entry to a first stage of the expansion turbine of a gas turbine engine. In an even more specific aspect, a method shall be disclosed which enables a spatially and, in certain embodiments also timely, resolved determination of the temperature distribution across a cross section of a hot gas channel. Determination of the temperature, as will be readily appreciated by the skilled person, means in this context measurement of at least one factor or parameter which is correlated with a temperature and deriving the hot gas temperature from the one or a multitude of parameters. Further, devices shall be disclosed which are useful in carrying out the method.

This is achieved by the subject matter described in claim 1 and further in the device claims.

Further effects and advantages of the disclosed subject matter, whether explicitly mentioned or not, will become apparent in view of the disclosure provided below.

Accordingly, disclosed is a method for determining a local hot gas temperature in a hot gas duct downstream a combustion device, which method comprises extracting at least one flue gas sample downstream the combustion device at at least one specific cross-sectional location of the hot gas duct, determining at least one flue gas species concentration in the sample, and determining the local flue gas total temperature based upon the at least one flue gas species concentration. In order to be able to determine the actual temperature of the extracted flue gas sample, the sample is extracted in particular before the hot flue gas flow from the combustor has delivered any useful work to a turbine. In more particular embodiments, the sample is extracted at a vane row of a first stage of the expansion turbine, and in even more particular embodiments at an upstream stagnation point of an airfoil profile of a guide vane of the expansion turbine first stage.

The method may in particular embodiments comprise cooling, or quenching, an extracted sample upon extraction through heat conduction. The cooling may in particular be provided in that a duct inside which the sample is ducted is cooled from outside. Said cooling or quenching may in particular be useful when the sample is extracted for example in or immediately downstream a furnace, such that further chemical reactions of a hot flue gas, in particular in the presence of a metallic duct surface, are prevented. Said reactions after extraction of the sample would otherwise falsify the measurement results.

The flue gas species may comprise, while not being limited to, carbon dioxide CO₂, oxygen O₂, water H₂O, and/or nitric oxides NOₓ. Information about the water content may be particularly useful if water or steam is injected into the combustion device or upstream of the combustion device. Methods for determining a gas temperature downstream a combustor based upon at least one flue gas species concentration are generally known to the skilled person. For instance, a measurement of residual oxygen in the flue gas, and/or the carbon dioxide content, may, with knowledge of the fuel composition, enable to determine how much fuel was combusted per unit mass of flue gas and compute an enthalpy balance of the sample on the way through the combustor. Thus, with knowledge of the enthalpy of the constituents upon entry of the combustion device, a local total enthalpy and total temperature of the flue gas at the location of extraction may be calculated. Such calculations may require knowledge of all specific enthalpies of all fluids flowing into the combustor, and may thus require, for instance, while not limited to: pressure and temperature of air at the entering the combustor, for instance pressure and temperature downstream a compressor of a gas turbine engine; temperature and/or pressure of the fuel when introduced into the combustor; temperature and/or pressure of any inert fluids, such as water of steam, which may be introduced into the combustor. In case of air breathing engines, knowledge of ambient conditions may be useful to determine the water content of the air. It is understood that such thermodynamic conditions must be known as total conditions, i.e. the enthalpies need to be determined inclusive of kinetic energy components. In embodiments, the fuel composition may be measured online, which is particularly beneficial if an enthalpy balance of the sample shall be calculated. Mass flow ratios of fluids introduced into the combustor may be determined based upon the species measurements. Determination of the nitric oxides concentration may provide an indication of local combustion peak temperatures, but may, with knowledge of the nitric oxides formation model of a combustor or specific burner, also serve to determine the local total temperature at the location of sample extraction. The method also accounts for the effect of coolant leakages, as those dilute the sample to the same extent as they have an impact on the actual temperature.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

In a more specific embodiment, the method comprises extracting a multitude of samples at a multitude of locations across a cross section of a hot gas duct. The at least one flue gas species concentration is determined individually for each of the samples. Thus, spatially resolved temperatures across the hot gas duct may be determined. More in particular, a spatially resolved temperature distribution across the hot gas duct may be determined. In even more specific embodiments, a sample may be extracted at each of a multitude of different radial positions within a circumferential, or circumferentially delimited, respectively, ring or annular segment of the hot gas duct. A sample may be extracted for instance at each of at least four, or exactly four, different radial positions within a circumferential ring segment of the hot gas duct. With, for instance, a hot gas temperature at four different radial positions, the radial distribution of the temperature may be modelled by a third degree polynomial. More generally spoken, with n sampling locations radially distributed, in particular along a radius, such as for on one airfoil, and accordingly n temperatures being determined at different radii, a radial temperature distribution may be modelled by a polynomial of degree n-1. Moreover, when all the samples are continuously extracted, and a sufficiently fast measurement technique is applied for determining the at least one flue gas species concentration, a time-resolved determination of the hot gas temperature can be achieved. If more than one flue gas species concentration is determined, it may be found advantageous if the concentration of said flue gas species is determined simultaneously, or at least within a narrow time window, such as to determine the species concentration in the same sample volume. The method may thus further comprises applying an analytics device for each sample.

One possible technique to be applied for the characterization of the flue gas composition, that is, the determination of the species concentration of at least one flue gas species, is Raman spectroscopy. A method or device applicable for the characterization of the flue gas composition is disclosed in US 2012/0136483. It is noted that these methods and devices are generally applicable for the characterization of gas compositions, and may thus for instance also be applied to continuously determine a fuel gas composition.

The fuel composition of a fuel gas may for an instance be continuously measured online, but may in other instances be determined in certain time increments by any suitable analysis method. The composition of a liquid fuel may for instance be determined by an analysis of a fuel sample from a tank, or fuel samples may be taken intermittently. It may in this respect be a reasonable assumption that the fuel composition of a specific fuel does not significantly change in a short term.

Exemplary embodiments of the method may comprise extracting the flue gas sample at a stagnation point of a component provided in a hot gas duct downstream the combustion device, and more in particular immediately downstream the combustion device. Such embodiments may yield at least two beneficial effects. On the one hand, the recovered dynamic pressure at the stagnation point may support conveying an appropriate mass flow of flue gas through narrow sample orifices and sample lines. On the other hand, in extracting the samples at an upstream stagnation point of a component avoids that cooling air which is discharged onto the surface of the component, as is familiar to the person having skill in the art, has an impact on the result of the temperature determination. This way the highest temperature the component is actually subjected to is determined. In even more particular embodiments, the combustion device is a combustor of a gas turbine engine, and the component is a first guide vane downstream the combustor. The method then may comprise extracting the flue gas sample at an upstream stagnation point of an airfoil profile at the leading edge of an airfoil of the first guide vane. It is readily understood that an airfoil profile in this context designates a cross sectional profile of an airfoil. The method may further comprise, as suggested above, extracting the flue gas sample upstream of any coolant discharge opening provided on an outer surface of the component such as to avoid ingestion of discharged coolant into the sample.

When applying the herein described method in a gas turbine engine, a comparison with the standard calculation of the temperature at the turbine inlet, which is based upon a measurement of the exhaust temperature at the turbine outlet and the turbine pressure ratio, may serve for a mutual calibration of the methods.

The at least one local temperature or spatially resolved temperature distribution determined by the method may be used for performing lifetime calculations of components in the hot gas duct.

The at least one determined local temperature is in further exemplary embodiments of the method fed into a control loop for controlling the operation of burners in the combustion device. This way, at least one of a mean temperature and/or a local temperature and/or a temperature profile of the flue gas in the hot gas duct may be controlled. For instance, fuel supply to individual burners may be controlled such as to even out the temperature distribution across the hot gas duct, and/or to avoid local temperature spikes. This serves to extend the lifetime of components, but may also, for thermodynamic reasons, yield beneficial effects on efficiency and performance of a gas turbine engine. Also, the overall fuel/air ratio of the combustion process may be controlled such as to avoid local overheating. Other control action may be conceived.

In other aspects of the present disclosure, an airfoil as set forth in claim 10 is disclosed. At least one sample extraction orifice is provided on an outer surface of the airfoil, and in particular embodiments at a stagnation point, more in particular at an upstream stagnation point, of an airfoil profile. A sample duct is provided in fluid communication with the sample extraction orifice and running inside the airfoil. In more particular embodiments, a multitude of extraction orifices may be provided on the outer surface of the airfoil. All extraction orifices may be provided at an upstream stagnation point of the airfoil profile. Each extraction orifice may in particular be in fluid communication with a separate sample duct. It will be appreciated that it is useful if the sample duct, inside which the sample is ducted upon extraction, is cooled from outside, and is sufficiently cooled to quench the sample such as to prevent further reaction of fuel gas species. In a gas turbine airfoil, the duct runs within a coolant cavity, and thus cooling of the duct will intrinsically be provided. The duct may or may not, as needed, be equipped with cooling features. Also, adequate conductive cooling for the sample orifices may be required, and adequate cooling features may be provided. More in particular, the sample duct or the sample ducts run towards a spanwise end of the airfoil, and all sample ducts may run towards the same spanwise end. The skilled person will appreciate, that the sample duct is intended to be provided in fluid communication with an analytics device for determining and quantifying the concentration of at least one characteristic flue gas species which is expected in the sample. As implied, important species to quantify may comprise at least one of oxygen O₂, carbon dioxide CO₂, and water H₂O, but also nitric oxides NOₓ. The residual species concentration of oxygen, as noted above, is suited to determine by an appropriate calculation an equivalence ratio of the combustion. Combined information about the residual oxygen concentration in the flue gas, the carbon dioxide concentration and water content of the flue gas may in certain instances be sufficient for a characterization of the fuel composition. If a combustion device is operated with steam or water injection, a determination of the water content of the flue gas, and additional information about fuel composition, equivalence ratio, and the water content for instance of ambient air used for the combustion may provide a relative mass flow of added water or steam per unit mass flow of oxidizer or flue gas. The airfoil may in particular be provided as an airfoil for an expansion turbine. The airfoil may further be equipped with cooling means of any kind familiar to the skilled person. The skilled person will also appreciate, that in that the sample orifices are provided at an upstream stagnation point of a respective airfoil profile, it is avoided that for instance cooling air which is discharged onto the surface of the airfoil may mix with a flue gas extracted at a sample orifice.

In other aspects of the present disclosure, a vane member is disclosed, wherein the vane member comprises at least one airfoil of the type described above. In particular, the sample duct runs towards the root of the vane member. The root of a vane member is commonly considered as the end which is intended to be installed radially outwardly and in a turboengine housing, while the tip of a vane is intended to be pointing radially inwardly. The vane member may in particular be provided as a vane member for an expansion turbine. The vane member may further be equipped with cooling means of any kind familiar to the skilled person.

A multitude of extraction orifices may in more particular embodiments of the vane member be provided on the outer surface of the vane member, and at least at two different positions along a spanwidth of an airfoil or a radial extent of the vane member, respectively. It is understood, in this respect, that a vane member may comprise one single or multiple airfoils. It is further understood that a vane member may be intended to be placed in a turboengine, with clearly dedicated spanwise ends of the airfoil or the airfoils to be placed at a radially inner position and a radially outer position of the turboengine. Thus, for a single airfoil as a vane member reference is made to the spanwidth of the airfoil. If the vane member, however, comprises platforms, and more in particular for a multi-airfoil vane member, reference may be made to a well-defined radial direction. The multiple extraction orifices may be distributed along the spanwidth extent of one airfoil, but may also be provided on more than one airfoil of a multi-airfoil vane member, and distributed along the radial extent of the vane member on multiple airfoils. In particular, there may be at least four, and in specific embodiments exactly four, extraction orifices be provided at different spanwise or radial positions, such that samples may be extracted at at least four or exactly four radial positions in a hot gas duct in which the vane member is installed. As indicated above, extracting n samples at n different radial positions within a circular ring segment of the hot gas duct allows modelling a radial temperature profile by a polynomial of degree n-1. Further, a separate sample duct is provided in fluid communication with each extraction orifice.

As the skilled person will readily appreciate, the internal geometry of an airfoil or a vane member comprising extraction orifices and internal sample ducts may prove rather complex and may be expensive to manufacture with the required precision. As such, the airfoil vane member disclosed herein is predestined for being manufactured by means of an additive manufacturing technique, in which layers of material are subsequently generated and fused to each other. Substantially, those techniques work similar to three dimensional printing. A layer of material powder, for instance a metal powder, is placed on a surface, and along a specific geometry the powder is melted and re-solidified. A further layer of material powder is placed on top, and again the material powder is along a specific geometry melted and re-solidified, and the solidified material fused to the underlying layer. A layer thickness may typically, while non-limiting, be in a range of tenths of millimeters. For melting the powder, for non-limiting instances, a laser beam or electron beam may be applied. These techniques are referred to in the art as Selective Laser Melting SLM and Electron Beam Melting EBM. The geometry along which the material is melted and re-solidified can easily be controlled in controlling the path of the beam and/or in modulating the beam intensity.

In still further aspects of the present disclosure, a gas turbine engine is disclosed which comprises at least one airfoil and/or turbine vane member of the type disclosed above. Said airfoil vane member may in particular be provided in an expansion turbine, and more in particular in a guide vane row, also referred to in the art as a nozzle, of a first stage of an expansion turbine. This enables to locally determine hot gas temperatures downstream the combustor and at the entry of the first expansion turbine stage, that is, to locally determine the hot gas temperature at the mechanically and thermally highly loaded first expansion turbine guide vanes. As noted above, local hot spots can be detected and the temperatures detected at those local hot spots may be used for lifetime calculations of an airfoil vane member. Likewise, of course, also temperatures lower than expected may influence predictions of lifetime, or lifetime consumption, of the component. In this respect, in order to generate a picture of the temperature distribution which is as comprehensive as required or feasible, at least two airfoils or vane members with extraction orifices and sample lines are provided at different circumferential positions in a guide vane row. As noted above, the said guide vane row may in particular be a guide vane row of a first turbine stage of an expansion turbine. It is understood that it is not necessary and may not be economically feasible that every airfoil or all vane members of the first expansion turbine stage static vane row is equipped with sample extraction orifices. In certain embodiments, the airfoils and/or vane members which are equipped with extraction orifices may be at least essentially equally distributed at for non-limiting instances three, four or five circumferential positions around the circumference of the hot gas duct.

The determined temperatures may be used in a closed loop control to control the temperature in controlling the overall fuel and/or oxidant and/or inert medium mass flows provided to the combustor. A comprehensive temperature profile may be used in a closed loop control to control the fuel and/or oxidant mass flow provided to individual burners inside a combustor, and/or control inert medium fluid flow to certain segments of the combustor, and thus to control and, for instance, even out the temperature distribution in the hot gas duct, or at the entry to the first expansion turbine stage, respectively.

It is further understood that the different flue gas samples must not be mixed before determining the flue gas species of interest. It may prove complicated, and is furthermore not feasible if continuous measurements are desired, to multiplex the different samples. Thus, it may be provided that a flue gas analytics device is provided in flow communication with each sample duct.

### BRIEF DESCRIPTION OF THE DRAWINGS

The subject matter of the present disclosure is now to be explained in more detail by means of selected exemplary embodiments shown in the accompanying drawings. The figures show
- Fig. 1: a schematic view of an exemplary embodiment of a gas turbine vane member, and
- Fig. 2: a sectional view of the vane member of figure 1.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

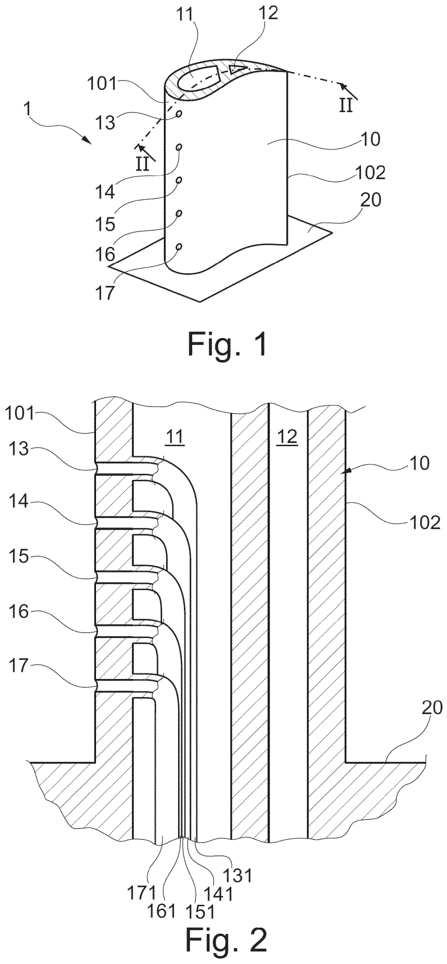

Figure 1 depicts schematically an exemplary embodiment of a vane member which is suitable for use in carrying out the method according to the present disclosure. Vane member 1 comprises an airfoil 10 and a schematically sketched root platform 20. As is familiar to the skilled person, a vane member may comprise more than one airfoil with common platforms. Airfoil 10 comprises a leading edge 101 and a trailing edge 102. The airfoil is in the present illustration cut at a spanwise position. The airfoil tip is thus not depicted. However, the skilled person will readily appreciate that a second platform, or shroud, may or may not be provided at the tip of the airfoil. Turboengine vanes which are intended for use in an expansion turbine of a gas turbine engine, in particular in the first turbine stages, are generally equipped with a cooling system. The herein depicted vane member may in particular be a vane member intended for use as vane member in the first stage of an expansion turbine, i.e. to be installed immediately downstream a combustor. That is, member 1 as illustrated in figure 1 is one of the thermally highest loaded components in a gas turbine engine. Thus, although the vane member is provided with a cooling system, and generally a mean hot gas temperature at the entrance into the first turbine stage guide vane row is known, it might be desirable to gather some information about local temperatures. Airfoil 10 comprises cavities or channels enclosed by a wall. In the shown embodiment, two channels 11 and 12 extend along the spanwidth of the airfoil, or the radial extent of the vane member, respectively, inside the airfoil. In a manner familiar to the person having ordinary skill in the art, channels 11 and 12 are intended to be in fluid communication with a coolant supply system of a gas turbine engine, and serve as cooling channels. Fluid communication, in this respect, does not necessarily mean that each of channels 11 and 12 is directly connected to the coolant supply system. Rather, channels 11 and 12 may for instance be provided in a serial flow relationship, wherein channel 11 is at an upstream end connected to the coolant supply system and at a downstream end is connected to channel 12. However, apparently, although in this configuration channel 12 is not directly connected to the coolant supply system, channel 12 is in fluid communication with the coolant supply system through channel 11. More or less than two cooling channels extending along the spanwidth, or a radial direction, respectively, may be provided. In a manner also familiar to the person having skill in the art, the internal cooling channels are usually in fluid communication with cooling orifices in the wall of airfoil 10, through which in most common embodiments coolant is discharged from the internal cooling channels onto the outer surface of the airfoil 10. However, as those cooling orifices are firstly perfectly known to the person having ordinary skill in the art of gas turbine engineering, those are secondly not significant for the core of the herein disclosed subject matter, and the specific features of the device as herein disclosed, and thirdly for the sake of clarity and comprehensibility of the significant features, the cooling orifices have been omitted in the present depiction. It is understood, that they may be present in the exemplary embodiment in any configuration familiar to or conceivable by the skilled person. At the leading edge 101 of the airfoil, and more in particular at least essentially at an upstream or leading edge stagnation point of a respective airfoil profile, sample extraction orifices 13, 14, 15, 16 and 17 are provided. Those must not be mixed up with cooling orifices. The purpose and benefit of providing the sample extraction orifices will be fully appreciated in view of figure 2 and the description below.

Figure 2 illustrates a section of the embodiment shown in figure 1 along line II-II. As noted above, there are commonly channels provided through the outer wall of airfoil 10 for cooling purposes, through which for instance coolant from channels 11 and 12 may be discharged onto the outer surface of the airfoil. As further noted above, those details which are not significant to the understanding of the subject matter of the present disclosure have been omitted in the illustrations. At the leading edge 101 of the airfoil 10, sample extraction orifices 13, 14, 15, 16 and 17 are provided. As is appreciated in view of figure 2, each of the sample extraction orifices is in fluid communication with a respective sample duct 131, 141, 151, 161 and 171. The sample ducts run inside channel 11 and towards the root of the vane member. In that the sample ducts run inside a channel in which coolant for the airfoil is provided, the ducts are intensely cooled from outside, which in turn serves to quench potential further reactions of the hot sample gas. Channel 11 is open at the root, to be in fluid communication with a coolant supply system when the vane is installed in a gas turbine engine. Thus, sample ducts 131, 141, 151, 161 and 171 are accessible from the vane root. The resulting internal geometry of the vane is fairly complex, with hard to access undercuts. However, such geometries may be comparatively easily manufactured by three-dimensional printing additive manufacturing techniques, as outlined above. When installed in a gas turbine engine, the sample ducts may be connected to analytics devices, which analytics devices are capable of determining the concentration of at least one flue gas species. Examples for suitable measurement devices and/or principles are given above. The sample extraction orifices are provided, as noted in connection with figure 1, at least essentially at a stagnation point of the respective profile line of the airfoil. Thus, when operated in a running gas turbine engine, flue gas will enter the sample ducts through the sample extraction orifices. In that the sample extraction orifices are located at upstream stagnation points, there is on the one hand the total pressure of the flue gas available for conveying a flue gas sample through the sample ducts and to an analytics device. Furthermore, it is avoided that for instance cooling air which is discharged from any of the internal cooling channels onto the outside of the airfoil may enter through a sample extraction orifice and dilute the flue gas sample.

The gas flowing to the first guide vane row of an expansion turbine in a gas turbine engine from the combustor still yields the same total temperature as after combustion. The total temperature, as the skilled person will readily appreciate, is the temperature at a stagnation point, with the dynamic energy of a gas flow been recovered through a loss-free deceleration. That is, in other words, the hot gas flow from the combustor has not yet delivered any useful work to the turbine. Thus, the total temperature of the hot gas flow meeting a first expansion turbine vane member can be determined by an enthalpy balance over the boundaries of the combustor. In brief, one method for determining a local temperature may roughly follow the following principle. For an instance, in one embodiment an air breathing gas turbine engine may be operated with dry gas fuel combustion. That is, no water or steam is injected in the combustor. If for each sample extracted through one of the sample extraction orifices the residual oxygen content is determined, this provides information about the equivalence ratio of the combustion process from which the flue gas sample originates. If the fuel gas composition is known, it is known how much fuel was combusted per unit mass flow of air flowing into the combustor, or per unit mass flow of flue gas. It can subsequently be determined how much combustion gases like carbon dioxide and water have been generated per unit mass flow of flue gas. Based upon this information, the oxygen consumption and the fuel mass per unit mass of flue gas is corrected recursively, until a converging solution is achieved about how much air and how much fuel was provided per unit mass of flue gas. The water content of the combustion air is generally known from measurements of ambient conditions. Thus, the flue gas composition can be determined, in one instance, from a fuel gas composition and the residual oxygen content, or the oxygen consumption, respectively. This allows to determine the specific heat capacity cₚ of the flue gas. If the total temperature of the combustion air flowing into the combustor and of the fuel is known, the total enthalpy of the combustion air and the fuel per unit mass of combustion air and fuel, respectively, can be determined. As it is further known how much combustion air and fuel contributed to one unit mass of flue gas, it can readily be determined how much enthalpy per unit mass of flue gas was provided by combustion air, by the fuel, and, with the lower heating value of the fuel, how much enthalpy per unit mass of flue gas was provided by combusting the fuel in the combustion air. This finally results in the total enthalpy per unit mass of flue gas, and with the specific heat capacity cₚ of the flue gas sample the total temperature of the flue gas from which the flue gas sample was extracted is determined. That is, the local flue gas temperature at the location where the sample was extracted is known. The vane member shown in figures 1 and 2 enables the extraction of a multitude of flue gas samples at different positions along the spanwidth of the airfoil, or the radial extent of the vane member, respectively. As will be readily appreciated, the spanwidth coordinate of the airfoil translates to a radial coordinate of the hot gas duct of the gas turbine engine when the vane member is installed in a gas turbine engine. Thus, the local flue gas composition and, accordingly, the local flue gas total temperature can be determined at different radii of the hot gas duct. Further, it may be provided that a multitude of vane members of the type outlined in figures 1 and 2 is installed and circumferentially distributed in the guide vane row of the first expansion turbine stage of a gas turbine engine. This enables to determine a local temperature values and further to model a temperature distribution across the annular hot gas duct. The resulting values may be applied, for non-limiting instances, to improve lifetime calculations of installed components. In other non-nonlimiting instances, the temperatures may be used in a closed loop control to control the distribution of the fuel to different burners in the combustor in order to better even out the temperature distribution.

It is understood that the method for determining a local flue gas temperature from at least one flue gas species concentration as sketched up above provides only a rough outline of one possibility to do so. The person skilled in the art of gas turbine engineering will know and/or be able to readily conceive and implement other ways to calculate the enthalpy balance based upon at least one flue gas species concentration, and from there the total temperature of the flue gas. It is understood that other ways of calculation may be chosen without deviating from the teaching of the present disclosure, and thus are covered by the claimed scope of protection.

### LIST OF REFERENCE NUMERALS

- 1: vane member
- 10: airfoil
- 13: sample extraction orifice
- 14: sample extraction orifice
- 15: sample extraction orifice
- 16: sample extraction orifice
- 17: sample extraction orifice
- 20: platform
- 101: leading edge
- 102: trailing edge
- 131: sample duct
- 141: sample duct
- 151: sample duct
- 161: sample duct
- 171: sample duct

## Claims

1. A method for determining a local hot gas temperature in a hot gas duct downstream a combustion device, the method comprising extracting at least one flue gas sample at at least one specific cross-sectional location of the hot gas duct downstream the combustion device, **characterized in** determining at least one flue gas species concentration in the sample,
and determining the local flue gas total temperature based upon the at least one flue gas species concentration.

2. The method according to any of the preceding claims, **characterized in** extracting a multitude of samples at a multitude of locations across a cross section of the hot gas duct, determining the at least one flue gas species concentration for each of the samples individually, and determining spatially resolved temperature values across the hot gas duct and in particular extracting a sample at each of a multitude of different radial positions within a circumferential ring segment of the hot gas duct.

3. The method according to the preceding claim, **characterized in** cooling the sample upon extraction through heat conduction, in particular in cooling a duct within which the sample is ducted outside.

4. The method according to any of the preceding claims, **characterized in** extracting the flue gas sample at a stagnation point of a component provided in a hot gas duct downstream the combustion device.

5. The method according to the preceding claim, **characterized in that** the combustion device is a combustor of a gas turbine engine, and further the component is a first guide vane (1) downstream the combustor, wherein the method further comprises extracting the flue gas sample at an upstream stagnation point of an airfoil profile at the leading edge (101) of an airfoil (10) of the first guide vane.

6. The method according to any of the two preceding claims, **characterized in** extracting the flue gas sample upstream of any coolant discharge opening provided on an outer surface of the component, such as to avoid ingestion of discharged coolant into the sample.

7. The method according to any of the preceding claims, further comprising performing lifetime calculations of components in the hot gas duct based upon the at least one determined local temperature.

8. The method according to any of the preceding claims, **characterized in that** the at least one determined local temperature is fed into a control loop for controlling the operation of burners in the combustion device.

9. The method according to the preceding claim, **characterized in** controlling at least one of a mean temperature and/or a local temperature and/or a temperature profile of the flue gas in the hot gas duct.

10. An airfoil (10) for carrying out the method of any preceding claim, wherein at least one sample extraction orifice (13, 14, 15, 16, 17) is provided on an outer surface of the airfoil, and a sample duct (131, 141, 151, 161, 171) is provided in fluid communication with the sample extraction orifice and running inside the airfoil and intended to be in fluid communication with an analytics device for determining the at least one flue gas species concentration in the sample extracted at the sample extraction orifice , wherein the airfoil is a gas turbine airfoil comprising a coolant cavity, and the sample duct runs within the coolant cavity of the airfoil.

11. A vane member (1), the vane member **characterized in** comprising at least one airfoil (10) according to the preceding claim.

12. The vane member according to the preceding claim, **characterized in that** a multitude of extraction orifices (13, 14, 15, 16, 17) are provided on the outer surface of the vane member, and at least at two different positions along a spanwidth of an airfoil (10) or a radial extent of the vane member, respectively, wherein further a separate sample duct (131, 141, 151, 161, 171) is provided in fluid communication with each extraction orifice.

13. A gas turbine engine comprising at least one vane member (1) according to any of the two preceding claims.

14. The gas turbine engine according to the preceding claim, **characterized in that** at least two vane members with extraction orifices and sample lines are provided at different circumferential positions in a guide vane row.

15. The gas turbine engine according to any of the preceding claims claiming a gas turbine engine, **characterized in that** a flue gas analytics device is provided in flow communication with each sample duct.

## Patentansprüche

1. Verfahren zum Bestimmen einer lokalen Heißgastemperatur in einem Heißgaskanal stromabwärts einer Verbrennungsvorrichtung, wobei das Verfahren das Entnehmen mindestens einer Rauchgasprobe an mindestens einer spezifischen Querschnittsstelle des Heißgaskanals stromabwärts der Verbrennungsvorrichtung umfasst, **gekennzeichnet durch** Bestimmen mindestens einer Rauchgasspezies-Konzentration in der Probe
und Bestimmen der lokalen Gesamt-Rauchgastemperatur basierend auf der mindestens einen Rauchgasspezies-Konzentration.

2. Verfahren nach einem der vorhergehenden Ansprüche, **gekennzeichnet durch** Entnehmen einer Vielzahl von Proben an einer Vielzahl von Stellen über einen Querschnitt des Heißgaskanals, individuelles Bestimmen der mindesten einen Rauchgasspezies-Konzentration für jede der Proben, und Bestimmen von ortsaufgelösten Temperaturwerten über den Heißgaskanal und insbesondere Entnehmen einer Probe an jeder von einer Vielzahl von unterschiedlichen radialen Positionen innerhalb eines Umfangsringsegments des Heißgaskanals.

3. Verfahren nach dem vorhergehenden Anspruch, **gekennzeichnet durch** Kühlen der Probe bei Entnahme durch Wärmeleitung, insbesondere Kühlen eines Kanals, in dem die Probe nach außen geführt wird.

4. Verfahren nach einem der vorhergehenden Ansprüche, **dadurch gekennzeichnet, dass** die Rauchgasprobe an einem Staupunkt einer Komponente entnommen wird, die in einem Heißgaskanal stromabwärts der Verbrennungsvorrichtung bereitgestellt ist.

5. Verfahren nach dem vorhergehenden Anspruch, **dadurch gekennzeichnet, dass** die Verbrennungsvorrichtung eine Brennkammer eines Gasturbinentriebwerks ist und die Komponente ferner eine erste Leitschaufel (1) stromabwärts der Brennkammer ist, wobei das Verfahren ferner das Entnehmen der Rauchgasprobe an einem stromaufwärtigen Staupunkt eines Schaufelblattprofils an der Vorderkante (101) eines Schaufelblattes (10) der ersten Leitschaufel umfasst.

6. Verfahren nach einem der beiden vorhergehenden Ansprüche, **dadurch gekennzeichnet, dass** die Rauchgasprobe stromaufwärts einer Kühlmittelaustrittsöffnung, die an einer Außenoberfläche der Komponente vorgesehen ist, entnommen wird, um eine Aufnahme von abgegebenem Kühlmittel in die Probe zu vermeiden.

7. Verfahren nach einem der vorhergehenden Ansprüche, ferner umfassend das Durchführen von Lebensdauerberechnungen von Komponenten in dem Heißgaskanal basierend auf der mindestens einen bestimmten lokalen Temperatur.

8. Verfahren nach einem der vorhergehenden Ansprüche, **dadurch gekennzeichnet, dass** die mindestens eine bestimmte lokale Temperatur in einen Regelkreis zum Steuern des Betriebs von Brennern in der Verbrennungsvorrichtung eingespeist wird.

9. Verfahren nach dem vorhergehenden Anspruch, **gekennzeichnet durch** Steuern von mindestens einem von einer mittleren Temperatur und/oder einer lokalen Temperatur und/oder einem Temperaturprofil des Rauchgases in dem Heißgaskanal.

10. Schaufelblatt (10) zum Ausführen des Verfahrens nach einem der vorstehenden Ansprüche, wobei mindestens eine Probenentnahmeöffnung (13, 14, 15, 16, 17) an einer Außenfläche des Schaufelblattes bereitgestellt ist und ein Probenkanal (131, 141, 151, 161, 171) in Fluidverbindung mit der Probenentnahmeöffnung bereitgestellt ist und innerhalb des Schaufelblattes verläuft und dazu bestimmt ist, in Fluidverbindung mit einer Analysevorrichtung zum Bestimmen der mindestens einen Rauchgasspezies-Konzentration in der an der Probenentnahmeöffnung entnommenen Probe zu stehen, wobei das Schaufelblatt ein Gasturbinenschaufelblatt ist, das einen Kühlmittelhohlraum umfasst, und der Probenkanal innerhalb des Kühlmittelhohlraums des Schaufelblatts verläuft.

11. Schaufelelement (1), wobei das Schaufelelement **dadurch gekennzeichnet ist, dass** es mindestens ein Schaufelblatt (10) nach dem vorhergehenden Anspruch umfasst.

12. Schaufelelement nach dem vorhergehenden Anspruch, **dadurch gekennzeichnet, dass** an der Außenfläche des Schaufelelements eine Vielzahl von Entnahmeöffnungen (13, 14, 15, 16, 17) bereitgestellt ist, und mindestens in zwei verschiedenen Positionen entlang einer Spannweite eines Schaufelblatts (10) bzw. einer radialen Ausdehnung des Schaufelelements, wobei ferner ein separater Probenkanal (131, 141, 151, 161, 171) in Fluidverbindung mit jeder Entnahmeöffnung bereitgestellt ist.

13. Gasturbinentriebwerk, umfassend mindestens ein Schaufelelement (1) nach einem der beiden vorhergehenden Ansprüche.

14. Gasturbinentriebwerk nach dem vorhergehenden Anspruch, **dadurch gekennzeichnet, dass** mindestens zwei Schaufelelemente mit Entnahmeöffnungen und Probenleitungen in unterschiedlichen Umfangspositionen in einer Leitschaufelreihe bereitgestellt sind.

15. Gasturbinentriebwerk nach einem der vorhergehenden Ansprüche, die ein Gasturbinentriebwerk beanspruchen, **dadurch gekennzeichnet, dass** eine Rauchgasanalysevorrichtung in Strömungsverbindung mit jedem Probenkanal bereitgestellt ist.

## Revendications

1. Procédé de détermination d'une température locale de gaz chaud dans un conduit de gaz chaud en aval d'un dispositif de combustion, le procédé comprenant l'extraction d'au moins un échantillon de gaz de combustion au niveau d'au moins un emplacement transversal spécifique du conduit de gaz chaud en aval du dispositif de combustion, **caractérisé par** la détermination de concentration en au moins une espèce de gaz de combustion dans l'échantillon, et la détermination de la température totale locale de gaz de combustion sur la base de la concentration en au moins une espèce de gaz de combustion.

2. Procédé selon l'une quelconque des revendications précédentes, **caractérisé par** l'extraction d'une multitude d'échantillons au niveau d'une multitude d'emplacements à travers une section transversale du conduit de gaz chaud, la détermination de la concentration en au moins une espèce de gaz de combustion pour chacun des échantillons individuellement, et la détermination de valeurs de température résolues spatialement à travers le conduit de gaz chaud et en particulier l'extraction d'un échantillon au niveau de chacune d'une multitude de positions radiales différentes au sein d'un segment annulaire circonférentiel du conduit de gaz chaud.

3. Procédé selon la revendication précédente, **caractérisé par** le refroidissement de l'échantillon lors de l'extraction par l'intermédiaire d'une conduction thermique, en particulier par le refroidissement d'un conduit au sein duquel l'échantillon est canalisé à l'extérieur.

4. Procédé selon l'une quelconque des revendications précédentes, **caractérisé par** l'extraction de l'échantillon de gaz de combustion au niveau d'un point de stagnation d'un composant fourni dans un conduit de gaz chaud en aval du dispositif de combustion.

5. Procédé selon la revendication précédente, **caractérisé en ce que** le dispositif de combustion est un système de combustion d'un moteur à turbine à gaz, et en outre le composant est une première aube directrice (1) en aval du système de combustion, dans lequel le procédé comprend en outre l'extraction de l'échantillon de gaz de combustion au niveau d'un point de stagnation en amont d'un profil aérodynamique au niveau du bord d'attaque (101) d'un profil aérodynamique (10) de la première aube directrice.

6. Procédé selon l'une quelconque des deux revendications précédentes, **caractérisé par** l'extraction de l'échantillon de gaz de combustion en amont de n'importe quelle ouverture de décharge de réfrigérant fournie sur une surface externe du composant, de façon à éviter une ingestion de réfrigérant déchargé dans l'échantillon.

7. Procédé selon l'une quelconque des revendications précédentes, comprenant en outre la mise en oeuvre de calculs de durée de vie de composants dans le conduit de gaz chaud sur la base de l'au moins une température locale déterminée.

8. Procédé selon l'une quelconque des revendications précédentes, **caractérisé en ce que** l'au moins une température locale déterminée est introduite dans une boucle de commande pour commander le fonctionnement de brûleurs dans le dispositif de combustion.

9. Procédé selon la revendication précédente, **caractérisé par** la commande d'au moins un parmi une température moyenne et/ou une température locale et/ou un profil de température du gaz de combustion dans le conduit de gaz chaud.

10. Profil aérodynamique (10) pour effectuer le procédé d'une quelconque revendication précédente, dans lequel au moins un orifice d'extraction d'échantillon (13, 14, 15, 16, 17) est fourni sur une surface externe du profil aérodynamique, et un conduit d'échantillon (131, 141, 151, 161, 171) est fourni en communication fluidique avec l'orifice d'extraction d'échantillon et s'étend à l'intérieur du profil aérodynamique et est prévu pour être en communication fluidique avec un dispositif d'analytique pour déterminer la concentration en au moins une espèce de gaz de combustion dans l'échantillon extrait au niveau de l'orifice d'extraction d'échantillon, dans lequel le profil aérodynamique est un profil aérodynamique de turbine à gaz comprenant une cavité de réfrigérant, et le conduit d'échantillon s'étend au sein de la cavité de réfrigérant du profil aérodynamique.

11. Élément d'aube (1), l'élément d'aube **caractérisé en ce qu'**il comprend au moins un profil aérodynamique (10) selon la revendication précédente.

12. Élément d'aube selon la revendication précédente, **caractérisé en ce qu'**une multitude d'orifices d'extraction (13, 14, 15, 16, 17) sont fournis sur la surface externe de l'élément d'aube, et au moins au niveau de deux positions différentes le long d'une largeur d'écartement d'un profil aérodynamique (10) ou d'une étendue radiale de l'élément d'aube, respectivement, dans lequel en outre un conduit d'échantillon indépendant (131, 141, 151, 161, 171) est fourni en communication fluidique avec chaque orifice d'extraction.

13. Moteur à turbine à gaz comprenant au moins un élément d'aube (1) selon l'une quelconque des deux revendications précédentes.

14. Moteur à turbine à gaz selon la revendication précédente, **caractérisé en ce qu'**au moins deux éléments d'aube avec des orifices d'extraction et des lignes d'échantillon sont fournis au niveau de positions circonférentielles différentes dans une rangée d'aubes directrices.

15. Moteur à turbine à gaz selon l'une quelconque des revendications précédentes revendiquant un moteur à turbine à gaz, **caractérisé en ce qu'**un dispositif d'analytique de gaz de combustion est fourni en communication d'écoulement avec chaque conduit d'échantillon.
